# EUROPEAN PATENT APPLICATION

(11) **EP 2 842 725 A1**
(43) Date of publication of application: **04.03.2015**
(21) Application number: 13182885.7
(22) Date of filing: 03.09.2013
(51) Int. Cl.: B29C 65/78, B29C 65/54, F03D 1/06, B29C 65/18

(54) **Apparatus for Assembling Blade Sections**

(71) Applicant: youWINenergy GmbH, 26135 Oldenburg (DE)
(72) Inventor: Rohden, Rolf, 26607 Aurich (DE)
(74) Representative: Wachenhausen, Marc

(57) **Abstract**

Apparatus (100) for assembling blade sections (200-1, 200-2) for forming a blade, comprising a first jaw portion (102) and a second jaw portion (104)pivotably connectable to each other at a first end (106) of the first and second jaw portions (102, 104). The first and second jaw portions (102, 104) include a second end (108) opposite to the first end (106) and have respective opposing surfaces (118, 120) extending between the first end (106) and the second end (108). The opposing surfaces 118, 120) are adapted in shape to an outer surface of respective joining end portions (212, 214) of the blade sections (200-1, 200-2) to be assembled. The apparatus also comprises a fastening means (110) for mounting the first and second jaw portions (102, 104) at the joining end portions (212, 214) of the blade sections (200-1, 200-2) , wherein the fastening means (110) is disposed at the second end (108) of each of the first and second jaw portion (102, 104) forming a free end.

## Description

The present subject-matter relates to an apparatus for assembling blade sections for forming a blade for a wind turbine rotor. In particular, the apparatus for assembling blade sections according to the present subject-matter enables an advantageous operation for assembling blades for large scale wind turbines.

In a commonly known wind turbine, a plurality of blades is mounted to a hub. The hub is connected to a generator system. The generator system generates electricity based on the rotational power caused by wind energy exerted on the blades. In commonly known wind turbine installations, the hub is rotatably mounted with the axis being aligned substantially horizontally. Such an installation is referred to as a horizontal axis wind turbine.

In recent years, the length of wind turbine blades has increased in order to provide wind turbine installations with an output of as much as 1 MW or more in a single turbine. Consequently, specific restrictions relating to the transportation of elements of such wind turbine installations are introduced. However, large wind turbine installations provide an increased output, an enhanced efficiency and, besides others, several economic improvements.

Conventional rotor systems are set up with single part blades which are mounted to the hub at the construction site of the wind turbine installation. Due to the fact that large scale wind turbine installations are frequently set up at remote locations, restrictions with respect to transportation of blades having a length of 50m or more, introduce a limitation on the power output of the single wind turbine and consequently decrease an economic and energy efficiency of the wind turbine.

Wind turbine blades which comprise two blade sections are known in the state of the art. Said blade sections, which are joined longitudinally subsequently, enable the transportation to the construction site of the wind turbine installation as the single blade sections meet the requirements of transportability. The blade sections are assembled to form a complete blade at the construction site and the blade is mounted to the hub of the wind turbine in order to complete the rotor. Special apparatuses for assembling such multi-section blades have not been developed yet.

### SUMMARY

According to the basic concept of the present subject-matter, an apparatus for assembling blade sections for forming a blade is provided. The apparatus comprises a first jaw portion and a second jaw portion pivotably connectable to each other at a first end of said first and second jaw portions, wherein said first and second jaw portions include a second end opposite to the first end, and wherein said first and second jaw portions have respective opposing surfaces extending between said first end and said second end, said opposing surfaces being adapted in shape to an outer surface of respective joining end portions of said blade sections to be assembled. The apparatus further comprises a fastening means for mounting said first and second jaw portions at said joining end portions of the blade sections, wherein said fastening means is disposed at said second end of each of said first and second jaw portion forming a free end.

The apparatus for assembling blade sections for forming a blade according to the present subject-matter is applicable to blade sections which are joinable to each other in a longitudinal direction. The apparatus for assembling blade sections according to the present subject-matter is arranged with said first jaw portion and said second jaw portion which are rotatably connectable to each other at said first end of said first and second jaw portions. When rotatably connected to each other at their respective first ends, the first jaw portion and the second jaw portion can be rotatably moved around a pivot towards and away from each other.

In the apparatus for assembling blade sections for forming a blade according to the present subject-matter, the first and second jaw portions include a second end opposite to the first end. Further, the first and second jaw portions have respective opposing surfaces extending between the first end and the second end wherein the opposing surfaces are adapted in shape to an outer surface of respective joining end portions of said blade sections to be assembled. When the first jaw portion and the second jaw portion are pivotably connected to each other, said opposing surfaces extending between said first end and said second end are pivotably moveable towards and away from each other. Accordingly, the first jaw portion and the second jaw portion can be moved in order to establish a contact between the opposing surfaces and surfaces of the joining end portions of the blade sections, to exert a force or a pressure to specific portions of said blade sections to be joined. Hence, a pressing space is provided between the opposing surfaces. Consequently, the apparatus for assembling blade sections is advantageous for joining blade sections which require a specific force or pressure to predetermined portions for joining.

In the apparatus for assembling blade sections according to the present subject-matter, a fastening means for mounting said first and second jaw portions at the joining end portions of the blade sections is provided. The fastening means is disposed at said second end of each of said first and second jaw portion forming a free end. The fastening means is adapted to exert a fastening force on said free end of each of said first and second jaw portion. By exerting a fastening force on said free end of each of said first and second jaw portion said opposing surfaces are urged towards, and pressed against, said surface of said respective joining end portion. Accordingly, by operating the fastening means the joining end portions are clamped when said first and seconds jaw portions are fixedly held at the joining end portions of the blade sections.

According to an embodiment of the present subject-matter, said fastening means is a hook and loop fastener with one or more hooks being provided at said second end of said first and second jaw portions and one or more loops engaging with said one or more hooks. According to this embodiment, said fastening means is a hook and loop fastener which is a releasably engageable fastening means. In order to fasten the first jaw portion to the second jaw portion, a loop is engaged with a corresponding hook. In other words, at least one hook and at least one loop are always arranged to be engageable with each other. Different arrangements are possible. For instance, it is possible to provide all hooks on one of the jaw portions and to arrange all loops on the other one of the jaw portions. However, it is also possible to arrange hooks and loops, alternately for instance, on one jaw portion and to provide corresponding loops and hooks on the other jaw portion. Other arrangements are however possible as long as one loop is engageable with another. Accordingly, it is also possible to provide hooks on each of the jaw portions and to connect two hooks by means of a loop.

According to an embodiment of the present subject-matter, said fastening means includes a drive means for drivingly fastening said first and second jaw portions. According to this embodiment, the first and second jaw portions can be drivingly fastened by means of said drive means. The operation of the apparatus according to the present subject-matter is based on the cooperation of the first and second jaw portions which are rotatably moveable with respect to each other and said fastening means including said drive means for drivingly fastening said first and second jaw portions. Consequently, providing said drive means for drivingly fastening said first and second jaw portions provide a specific advantage in the operation of the apparatus for assembling blade sections as the drive means can provide for a force acting on said first and second jaw portions in order to fasten said first and second jaw portions to the joining end portions of the blade sections. Such a drive means may be actuated electronically or hydraulically, for instance. Advantageously, the drive means is a motor drive.

According to an embodiment of the present subject-matter, the apparatus further comprises one or more spacing elements for providing a space between the opposing surfaces of the jaw portions and said outer surface of respective joining end portions of said blade sections to provide a space between said first and second jaw portions and said surface of said respective joining end portions of said blade sections. According to this embodiment, the mounting operation of the apparatus is optimized, because the one or more spacing elements provide said space between said first and second jaw portions and said outer surface of respective joining end portions. Hence, said one or more spacing elements can prevent said first and second jaw portions, in particular the opposing surfaces of the first and second jaw portions, from coming into contact with said outer surface of the joining end portions of the blade sections. Thus, a relative movement between the apparatus and the joining end sections of the blade sections is possible without the first and second jaw portions contacting the blade sections. Accordingly, the spacing elements can prevent the joining end portions of the blades sections from being damaged when the apparatus is moved relative to the blade sections. Furthermore, the mountability of the apparatus on the joining end portions of the blade sections is enhanced.

According to an embodiment of the present subject-matter, the one or more spacing elements protrude beyond at least one of said opposing surfaces and are retractable to a position in which said spacing elements do not protrude beyond said at least one of said opposing surfaces. According to this embodiment, the one or more spacing elements are moveable between a position in which said one or more spacing elements protrude beyond at least one of said opposing surfaces, and a position in which said one or more spacing elements are retracted and do not protrude beyond said at least one of said opposing surfaces. This embodiment has the specific advantage that a space between said opposing surfaces and said outer surface of respective joining end portions of said blade sections can be reliably provided. In this connection, retract shall mean any movement of the spacing element in a direction bringing the spacing element in the above mentioned retracted position. Furthermore, retract shall not limit the movement in such a way that the spacing element has to be actively moved by use of a tractive force. By contrary, retract shall also encompass the movement of the spacing element due to the application of a force onto the spacing element.

According to an embodiment of the present subject-matter, said one or more spacing elements are contactable to said joining end portions of said blade sections. This embodiment has the advantage that the one or more spacing elements are contactable to said joining end portions in order to reliably establish a space between said joining end portions and said first and second jaw portions. Advantageously, the spacing elements are constructed so that they can be easily moved on the outer surface of the joining end portions of the blade sections.

According to an embodiment of the present subject-matter, said one or more spacing elements are arranged at lateral ends of at least one of said first and second jaw portions, said lateral ends extending between said first and second ends. This arrangement has the advantage that said one or more spacing elements can be easily arranged at said first and second jaw portions.

According to an embodiment of the present subject-matter, said one or more spacing elements are formed as one or more rollers having respective outer circumferential surfaces which are rollable on the outer surfaces of said joining end portions of said blade sections upon positioning said apparatus on said blade sections. Using rollers as the one or more spacing elements can facilitate the positioning of said apparatus on said joining end portions of said blade sections because the apparatus is easily movable with the rollers being in contact with the outer surfaces of the joining end portions of the blade sections.

According to an embodiment of the present subject-matter, each of said one or more rollers is supported by a pivotable arm. The advantage of such an arrangement is that said one or more rollers can be pivotably moved between a position in which the one or more rollers act as the spacing elements and a position in which said rollers do not act as the spacing elements. Different arrangements are possible. For example, it is possible that two or more rollers are mounted on one pivotable arm. On the other hand, it is also possible to use one pivotable arm for each roller so that the rollers can be pivotably moved individually. Of course, it is also possible to implement a construction in which some rollers are grouped on one pivotable arm and two or more of such pivotable arms supporting a group of two or more rollers are provided, also in combination with pivotable arms only supporting one roller.

According to an embodiment of the present subject-matter, said pivotable arm is urged by an urging means such that said roller supported by said arm protrudes beyond at least one of said opposing surfaces and is retractable upon tightening said fastening means. According to this embodiment, an urging force can be applied to said pivotable arm by said urging means in order to urge said pivotable arm such that said roller supported by said arm protrudes beyond at least one of said opposing surfaces. Accordingly, a force is applied on the pivotable arm in order to ensure that the roller protrudes beyond the opposing surface and provides sufficient space between the opposing surfaces and the outer surface of the joining end portions of the blade sections. On the other hand, the urging force applied on the pivotable arm is chosen so that the roller supported by the pivotable is retractable when the fastening means is tightened with a force exceeding the urging force applied on the pivotable arm.

According to an embodiment of the present subject-matter, at least one of said first and second jaw portions includes a heating means for applying heat to said blade sections when said apparatus is positioned on said blade sections. Accordingly, it is possible to apply heat to the joining end portions of the blade sections when the apparatus is positioned on the joining end portions of the blade sections in order to assist the joining process of two blade sections. This is particularly advantageous in processes using materials for bonding the blade sections the reactivity of which being enhanced, accelerated for instance, under the influence of heat.

According to an embodiment of the present subject-matter, a device for injecting resin into a hollow portion of said joining end portions is connectable to at least one of said first and second jaw portions. The resin which can be injected by said device is preferably a thermo setting resin. Such a fluid is advantageous for providing a permanent joint between the blade sections. In particular, in cooperation with the heating means for applying heat to said joining end portions of said blade sections, the use of a thermo setting resin provides advantages with respect to the strength of the joint between the blade sections.

According to an embodiment of the present subject-matter, said first and second jaw portions are separable and each of said first and second jaw portions is portable. Consequently, the apparatus can at least be disassembled so that said first and second jaw portions are separated from each other and can be transported in separate parts. According to this embodiment, the transportation of said apparatus is facilitated due to the fact that said apparatus can be divided in smaller parts.

### BRIEF DESCRIPTION OF THE DRAWINGS

- Fig. 1: shows the apparatus for assembling blade sections for forming a blade according to an embodiment in a three dimensional view;
- Fig. 2: shows the apparatus of Fig. 1 in a side view;
- Fig. 3: shows the apparatus of Fig. 1 in a top view;
- Fig. 4: shows a transition of a form of blade sections to which the apparatus of the embodiment is applicable;
- Fig. 5a - 5c: show different states of a mounting process of said apparatus; and
- Fig. 6: shows an arrangement in which the apparatus for assembling blade sections is mounted onto a blade.

In the following, an embodiment of the present subject-matter is explained based on the drawings. It is noted that the drawings show a specific embodiment as explained below and blade sections to which the apparatus is applicable. Further alternative modifications of the embodiment which are at least in part not illustrated are specified in the following description:

### DESCRIPTION OF THE EMBODIMENTS

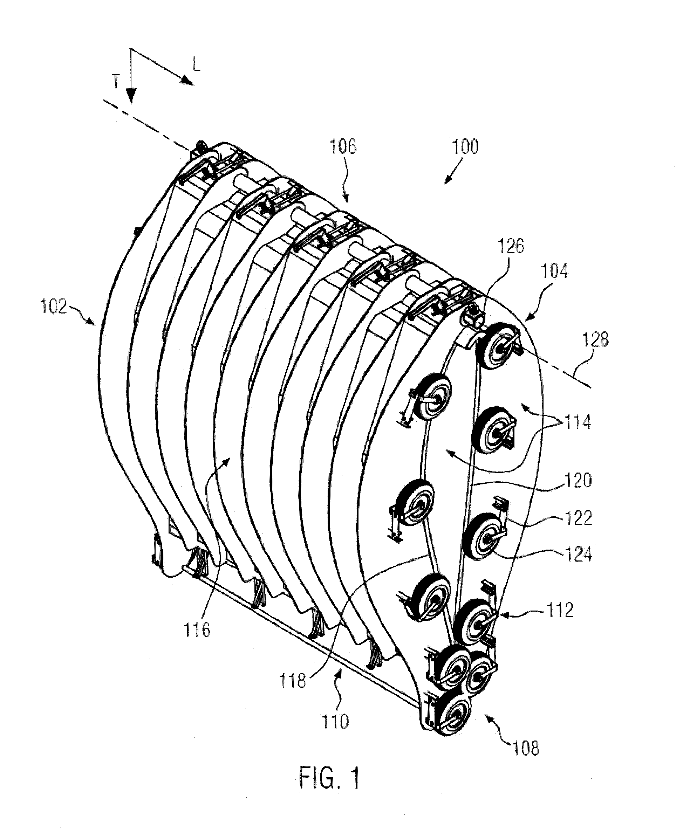

Fig. 1 shows the apparatus 100 for assembling blade sections for forming a blade according to the embodiment. In the following, the components forming the apparatus will be explained first.

The apparatus 100 shown in Fig. 1 comprises a first jaw portion 102 and a second jaw portion 104.

As further shown in Fig. 1, the first jaw portion 102 includes a surface 118 and the second jaw portion 104 includes a surface 120. The surfaces 118, 120 are opposed to each other in order to create a pressing space there between. The surfaces 118, 120 are formed by sheet metal or a similar material. The surfaces 118, 120 are provided with a specific profile which is designed in compliance with a predetermined outer appearance of joining end portions of blade sections to be discussed below.

Each of the first jaw portion 102 and the second jaw portion 104 has a first end 106. At the first end 106, the first jaw portion 102 and the second jaw portion 104 are pivotably connected by means of a pivot pin 126 defining a pivot axis 128. Accordingly, the first jaw portion 102 and the second jaw portion 104 can be pivotably moved towards and away from each other around the pivot axis 128.

The apparatus shown in Fig. 1 has a lateral direction which is in compliance with a longitudinal direction of a blade or blade segments to be assembled by the apparatus when received between the first jaw portion 102 and the second jaw portion 104. The lateral direction is shown in Fig. 1 with an arrow L. A longitudinal direction of the apparatus is defined as perpendicular direction with respect to the lateral direction, wherein the longitudinal direction is shown by a respective arrow T in Fig 1.

As shown in Fig. 1, the first jaw portion 102 and the second jaw portion 104 as well as the surfaces 118 and 120 extend in the longitudinal and the lateral direction. The surfaces 118 and 120 are formed with a specific profile which is defined based on the outer appearance of the blade or the joining end portions of the blade sections to be assembled by the apparatus as discussed above.

The first jaw portion 102 and the second jaw portion 104 also respectively comprise a second end 108 which is opposite to the first end 106.

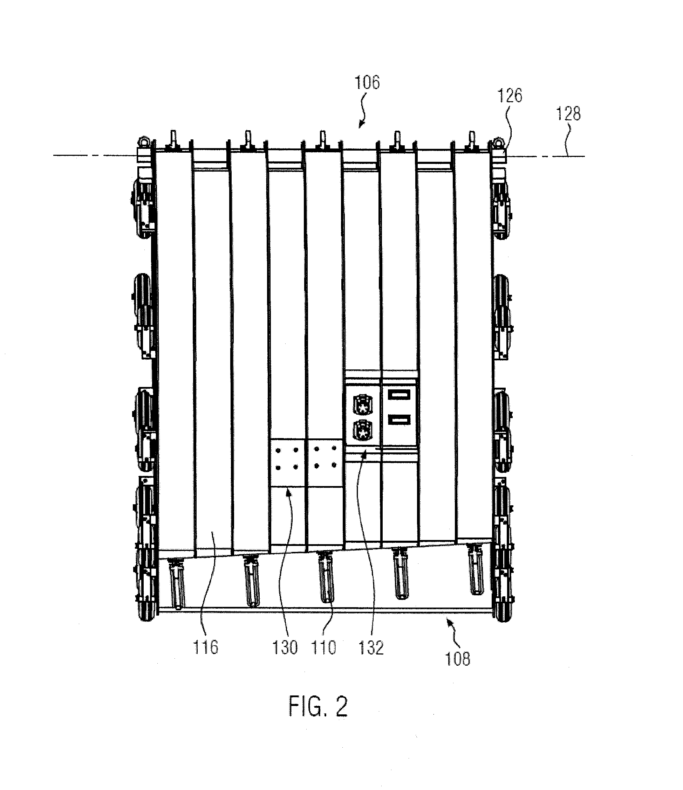

As can be gathered from Fig. 2, the surfaces 118 and 120 are tapered at the second end 108 owing to the fact that the blade to be assembled narrows towards its tip end. In other words, when viewing the apparatus in a side view as shown in Fig. 2, the outer contours of the ends of the surface at the first end 106 and the second end 108 are not in parallel but the outer contour of the end of the surfaces at the second end 108 is inclined towards the first end 106.

At the second end 108, a fastening means 110 is provided. In the present embodiment, the fastening means 110 is a hook and loop fastener. The hooks and loops are provided at the second end 108 of the first jaw portion 102 and a second jaw portion 104 such that each hook provided on one of the first jaw portion 102 and the second jaw portion 104 can engage with a corresponding loop provided on the other one of the first jaw portion 102 and the second jaw portion 104. The fastening means 110 also includes a drive means for drivingly fastening the first and second jaw portions 102, 104. The hooks and loops are preferably made of metal.

As shown in Fig. 1, the first jaw portion 102 and the second jaw portion 104 comprise lateral ends 114. The lateral ends 114 have a flat shape. On the lateral end 114 five pivotable arms 122 are provided on each of the first jaw portion 102 and the second jaw portion 104, respectively. Rollers 124 are mounted on the free ends of the pivotable arms 122. By means of the pivotable arms 122, the rollers 124 are positioned such that the rollers 124 protrude beyond the surfaces 118, 120. An urging means (not shown in the figures) is provided, which exerts a force on the pivotable arms 122 in a direction that the rollers 124 protrude beyond the surfaces 118, 120. Thus, by means of the pivotable arms 122 each carrying a roller 124 and the urging means, a spacing element 112 is provided for reliably establishing a space between the opposing surfaces 118, 120 and an outer surface of a joining end portion of the blade segments.

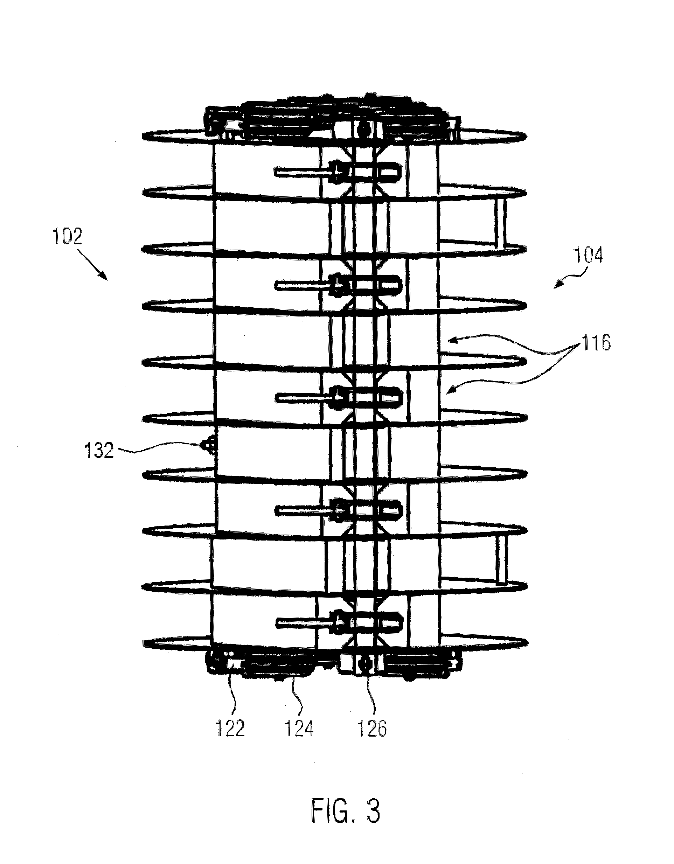

As shown in Figures 1, 2 and 3, the first and second jaw portions 102, 104 are constructed with grooves 116 being provided on the outer side of the jaw portions 102, 104, i.e. the side of the respective jaw portion on which the surfaces 118, 120 are not provided.

In one or more of the grooves 116, it is possible to accommodate an inlet 130 for connecting fluid lines of a metering device thereto as is shown in Fig. 2. The inlet 130 is connected to a supply duct (not shown in the figures) provided in the surface 118 of the first jaw portion 102 which supply path is constructed to suitably distribute the resin between the surface 118 of the first jaw portion 102 and the joining end portions 212, 214 of the blade sections.

Also, as is further shown in Fig. 2, a connector 132 is provided in the first jaw portion 102 which in turn is connected to one or more heating elements (not shown in the figures) which are adapted to heat the surface 118 of the first jaw portion 102. To the connector 132, a power supply may be connected in order to feed the heating elements with an electric current.

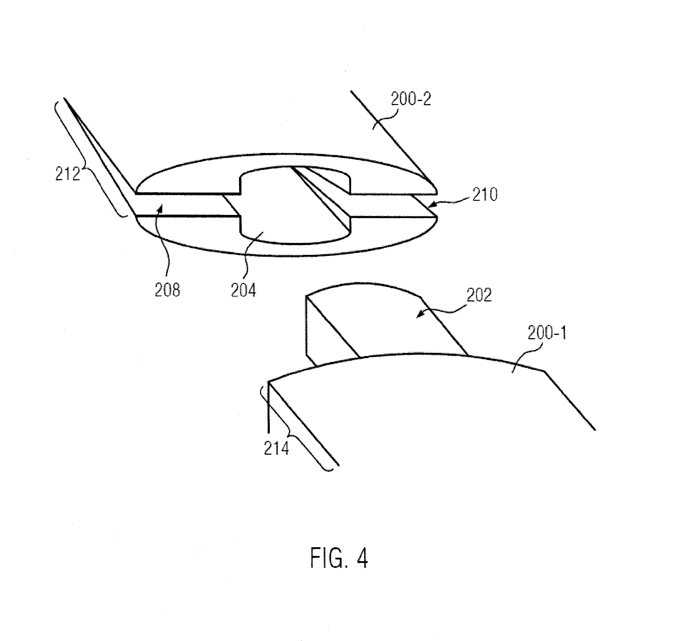

In the following, the operation of the apparatus according to the present embodiment is explained in detail. It is noted that the forms of blade sections and blades shown in the Fig. 4-6 are only examples for the specific application of the apparatus shown in Fig. 1 and the operation of the apparatus is not limited to the structure shown in Fig. 4-6.

A blade for a wind turbine rotor according to the embodiment comprises two blade sections which are integrally joined at a blade joint. One of the blade sections forms the tip of the blade whereas the other one of the blade sections is adapted to be connected to the rotor hub of the wind turbine.

As shown in Fig. 4, blade section 200-1 is adapted to be assembled to blade section 200-2 by the apparatus 100 shown in Fig. 1-3. Blade section 200-1 comprises a protrusion 202 protruding from joining end portion 214. On the other hand, blade section 200-2 comprises a cavity 204 in its joining end portion. The protrusion 202 of the other of the blade sections is insertable into the cavity 204 of blade section 200-2.

Furthermore, the blade sections 200-1, 200-2 are adapted to be glued by resin, such as a thermo settable resin which is introducible into the boundary region between the blade sections 200-1, 200-2.

For assembling blade sections 200-1, 200-2 for forming a blade, the blade sections are preassembled by inserting the protrusion 202 of one of the blade sections into the cavity 204 of the other of the blade sections. In this state, the cavity 204 of the blade section 200-2 of the above mentioned type is in an expanded or enlarged condition. The expanded or enlarged condition and the resulting contractibility can be achieved by providing at least one interruption of material in the joining end portion 212 of the blade section 200-2 having the cavity 204. The interruption of material can be formed as two slits 208, 210 as shown in Fig. 4. In the preassembled condition or in a condition with no load being exerted to the joining end portion 212 of the blade section 200-2 having the cavity 204, the inner dimensions of the cavity 204 are larger than the outer dimensions of the protrusion 202.

As consequence, at least the above mentioned forms of the blade sections shown in Fig. 4 are applicable to the present subject-matter. Further forms are possible which meet the requirement stated above regarding the contractibility of the cavity. In the following the explanation refers to the form of the blade sections 200-1, 200-2 shown in Fig. 4.

When the blade sections 200-1, 200-2 are preassembled, the apparatus shown in Fig. 1-3 can be put in a condition, where the fastening means 110 is in an inoperative state.

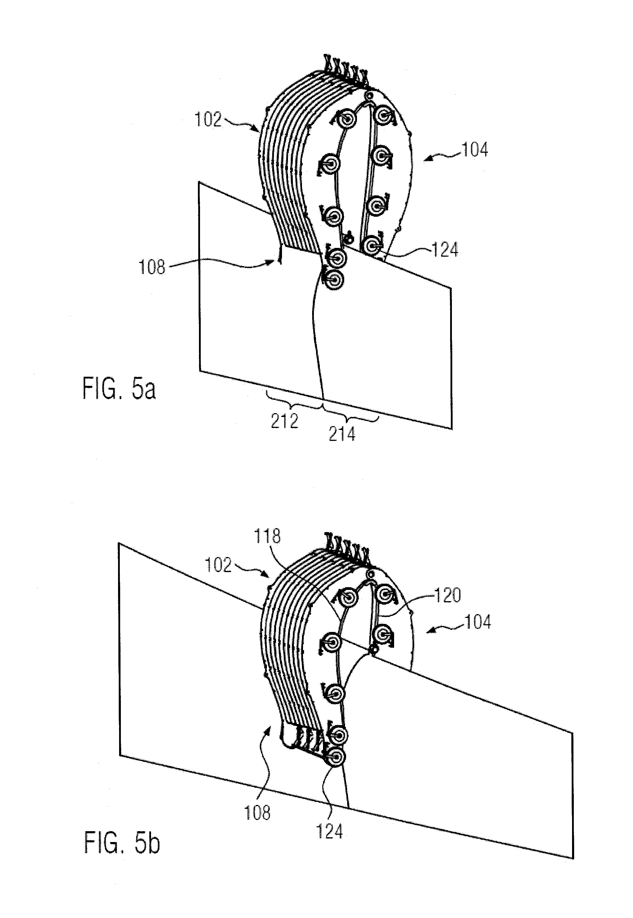

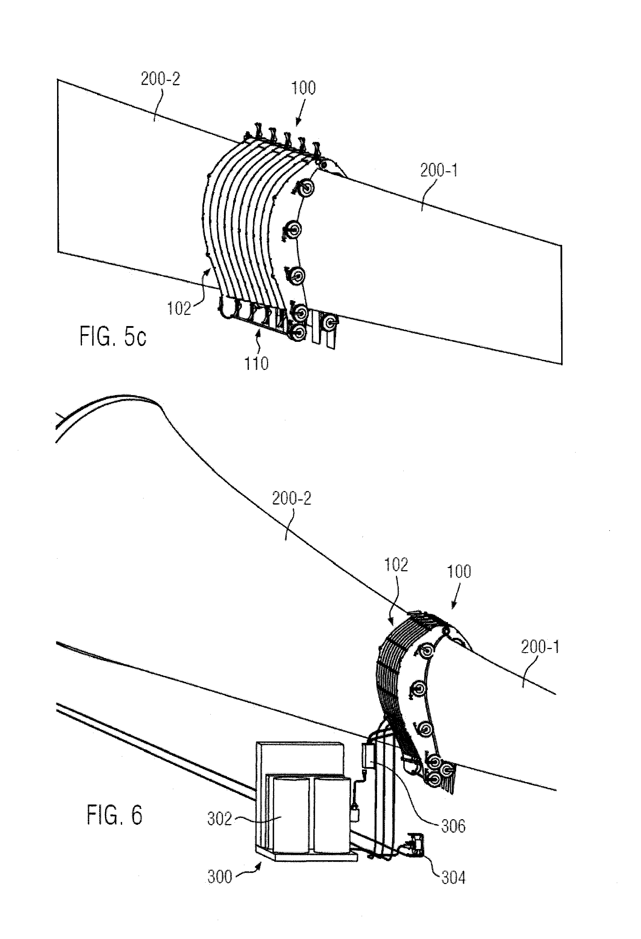

As shown in Fig. 5a the apparatus 100 is placed above the joining end portions 212, 214 of the preassembled blade sections. More precisely, the apparatus 100 is placed above the joining end portions 212, 214 with the second ends 108 of the first and second jaw portions 102, 104 facing towards the joining end portions 212, 214. The blade arranged under the apparatus 100 is arranged in such a manner that its nose portion is facing in the upward direction in Fig. 5a. In other words, the nose or leading edge portion of the blade faces the second ends 108 of the first and second jaw portions 102, 104 of the apparatus 100. As shown in Fig. 6a, the apparatus 100 is brought into contact with the joining end portions 212, 214 by vertical movement.

As described above, the apparatus 100 comprises five spacing elements 112 on the lateral ends 114 of each of the first and second jaw portions 102, 104. The spacing elements 112 comprise a pivotable arm 122, a roller 124 and an urging means urging the pivotable arm 122 in such a way that the roller 124 protrudes beyond the surface extending between the first end 106 and the second end 108. As shown in Fig. 5a and Fig. 1, one spacing element 112 of the above described type is arranged at the second end 108 of the first and second jaw portions 102, 104. More precisely, the spacing elements 112 at the second end 108 of the first and second jaw portions 102, 104 are arranged to come into initial contact with the surfaces of the joining end portions 212, 214, i.e. the nose portion of the blade.

As already described above, the spacing elements 112 provide for a space between the inner surfaces of the first jaw portion 102 and the second jaw portion 104 so that during mounting the apparatus 100 on the joining end portions 212, 214, the joining end portions 212, 214 are spaced from the inner surfaces 118, 120 of the first jaw portion 102 and the second jaw portion 104.

Due to the construction of the blade and the apparatus 100 of the present embodiment, when making initial contact with the nose or leading edge portion of the preassembled blade, the rollers provided on the second end 108 of the first and second jaw portions 102, 104 are pushed away from each other so that the first and second jaw portions 102, 104 perform a pivoting movement away from each other.

As the apparatus 100 is moved further downwards as is shown in Fig. 5b, the outer circumferential surfaces of the rollers 124 are rolling on the outer surfaces of the joining end portions 212, 214 of the blade sections 200-1, 200-2.

As shown in Fig. 5c, the apparatus 100 is moved until an abutment portion of the apparatus 100 comes into contact with the leading edge portion of the blade. In this state, the first jaw portion 102 and the second jaw portion 104 encompass the joining end portions 212,214.

Next, the fastening means is operated. As described above, the fastening means 110 is a hook and loop fastener wherein one or more hooks are provided at the second end 108 of the first and second jaw portions 102, 104 and one or more loops being provided at the second end 108 of the other one of the second and first jaw portions 104, 102. The loops are engaged with the hooks and a drive means (not shown in the drawings) is operated for drivingly fastening the first and second jaw portions 102, 104. When the drive means is operated, a tractive force is generated and applied on the second ends 108 of the first and second jaw portions 102, 104 effecting a movement of the second ends 108 of the first and second jaw portions 102, 104 towards each other. Therefore, the opposing surfaces 118, 120 also move towards each other. The tractive force applied by the drive means is greater than the forces applied on the pivotable arms 122 by the urging means so that the pivotable arms retract until the opposing surfaces come into contact with the outer surface of the joining end portions 212, 214 of the blade sections 200-1, 200-2.

Accordingly, the apparatus 100 is fastened on the joining end portions 212, 214 of the blade sections 200-1, 200-2 and resin can be introduced into the apparatus in order to bond the blade sections 200-1, 200-2 to each other.

Fig. 6 shows an arrangement in which a resin injection device 300 is connected to the apparatus 100. The resin injection device 300 comprises a metering and/or mixing device 302 for metering a ready-to-use mixture of resin components or for mixing reactive components and metering the obtained mixture. Furthermore, the injection device 300 is connected to the inlet 132 of the apparatus 100 via a supply line 306. A power supply 304 is provided and connected to the resin injection device 300 as well as to the connector 130 of the apparatus 100. As already described above, the power supply is connected to the apparatus 100 in order to feed the heating elements with an electric current. Accordingly, it is possible to apply heat on the joining end portions of the blade sections when the apparatus is positioned on the joining end portions of the blade sections. This is particularly advantageous in processes using materials for bonding the blade sections the reactivity of which being enhanced, accelerated for instance, under the influence of heat.

### MODIFICATIONS AND OTHER EMBODIMENTS

In the embodiment, 5 rollers 124 are provided on one side of each jaw portion 102, 104. However, it is possible to use a different number of rollers as well.

Furthermore, it is possible to use other means or elements for providing a space between the opposing surfaces and the outer surface of the joining end portions instead of rollers. For example, it is possible to use sliding elements instead of rollers.

In the embodiment, the rollers are retracted by a pressing force induced by the force applied by the fastening means. However, it is also possible to actively retract the rollers and pivotable arms by means of a suitable drive mechanism.

In the embodiment, the initial contact between the joining end portions 212, 214 of the blade and the apparatus 100 is made at the nose or leading edge portion of the preassembled blade. However, it is also possible to arrange the blade and the apparatus in such a way that the trailing edge of the blade makes initial contact with the apparatus when the apparatus is mounted on the joining end portions.

### LIST OF REFERENCE SIGNS

- 100: Apparatus for assembling blade sections
- 102: First jaw portion
- 104: Second jaw portion
- 106: First end
- 108: Second end
- 110: Fastening means
- 112: Spacing elements
- 114: Lateral ends
- 116: Grooves
- 118: Surface
- 120: Surface
- 122: Pivotable arm
- 124: Rollers
- 126: Pivot pin
- 130: Inlet
- 132: Connector
- 200-1: Blade section
- 200-2: Blade section
- 202: Protrusion
- 204: Cavity
- 208: Slit
- 210: Slit
- 212: Joining end portion
- 214: Joining end portion
- 300: Resin injection device
- 302: Metering and/or mixing device
- 304: Power supply
- 306: Supply line

## Claims

1. An apparatus (100) for assembling blade sections (200-1, 200-2) for forming a blade (200), the apparatus (100) comprising:
a first jaw portion (102) and a second jaw portion (104) pivotably connectable to each other at a first end (106) of said first and second jaw portions (102, 104), wherein said first and second jaw portions (102, 104) include a second end (108) opposite to said first end (106), and wherein said first and second jaw portions (102, 104) have respective opposing surfaces (118, 120) extending between said first end (106) and said second end (108), said opposing surfaces (118, 120) being adapted in shape to an outer surface of respective joining end portions (212, 214) of said blade sections (200-1, 200-2) to be assembled; and
a fastening means (110) for mounting said first and second jaw portions (102, 104) at said joining end portions (212, 214) of the blade sections (200-1, 200-2), wherein said fastening means (110) is disposed at said second end (108) of each of said first and second jaw portion (102) forming a free end.

2. The apparatus (100) according to claim 1, wherein said fastening means (110) is a hook and loop fastener with one or more hooks being provided at said second end (108) of said first and second jaw portions (102, 104) and one or more loops engaging with said one or more hooks.

3. The apparatus (100) according to claim 1 or 2, wherein said fastening means (110) includes a drive means for drivingly fastening said first and second jaw portions (102, 104).

4. The apparatus (100) according to any one of claims 1-3, wherein one or more spacing elements (112) are provided at at least one of said first and second jaw portions (102, 104) for providing a space between the jaw portions (102, 104) and the surface of the joining end portions (212, 214) of the blade sections (200-1, 200-2).

5. The apparatus (100) according to claim 4, wherein the one or more spacing elements (112) protrude beyond at least one of said opposing surfaces (118, 120) and are retractable to a position in which said spacing elements (112) do not protrude beyond said at least one of said opposing surfaces (118, 120).

6. The apparatus (100) according to claim 4 or 5, wherein said one or more spacing elements (112) are contactable to said joining end portions (212, 214) of said blade sections (200-1, 200-2).

7. The apparatus (100) according to one of claims 4-6, wherein said one or more spacing elements (112) are arranged at lateral ends (114) of at least one of said first and second jaw portions (102, 104), said lateral ends (114) extending between said first and second ends (106, 108).

8. The apparatus (100) according to one of claims 4-7, wherein said one or more spacing elements (112) are formed as one or more rollers (124) having respective outer circumferential surfaces which are rollable on the outer surfaces of said joining end portions (212, 214) of said blade sections (200-1, 200-2) upon positioning said apparatus (100) on said blade sections (200-1, 200-2).

9. The apparatus (100) according to claim 8, wherein each of said one or more rollers (124) is supported by a pivotable arm (122).

10. The apparatus (100) according to claim 9, wherein said pivotable arm (122) is urged by an urging means such that said roller (124) supported by said arm (122) protrudes beyond at least one of said opposing surfaces (118, 120) and is retractable upon tightening said fastening means (110).

11. The apparatus (100) according to one of the preceding claims, wherein at least one of said first and second jaw portions (102, 104) includes a heating means for applying heat to said joining end portions (212, 214) of said blade sections (200-1, 200-2) when said apparatus (100) is positioned on said joining end portions (212, 214) of said blade sections (200-1, 200-2).

12. The apparatus (100) according to one of the preceding claims, wherein a device for injecting resin into a hollow portion of said joining end portions (212, 214) is connectable to at least one of said first and second jaw portions (102, 104).

13. The apparatus (100) according to one of the preceding claims, wherein said first and second jaw portions (102, 104) are separable and each of said first and second jaw portions (102, 104) is portable.
